# EUROPEAN PATENT APPLICATION

(11) **EP 4 395 201 A1**
(43) Date of publication of application: **03.07.2024**
(21) Application number: 23156606.8
(22) Date of filing: 14.02.2023
(51) Int. Cl.: H04B 7/10

(54) **USER EQUIPMENT AND METHOD**

(30) Priority: 27.12.2022 JP 2022209620
(71) Applicant: Sharp Kabushiki Kaisha, Sakai-shi Osaka 590-8522 (JP)
(72) Inventor: OUCHI, Wataru, Sakai City, Osaka, 590-8522 (JP); LIU, Liqing, Sakai City, Osaka, 590-8522 (JP); SAKAMOTO, Ryunosuke, Sakai City, Osaka, 590-8522 (JP); NAKASHIMA, Daiichiro, Sakai City, Osaka, 590-8522 (JP); SUZUKI, Shoichi, Sakai City, Osaka, 590-8522 (JP)
(74) Representative: Müller Hoffmann & Partner

(57) **Abstract**

A user equipment, UE, is described. The UE may comprise a receiver and a transmitter; wherein a transmitter configured to select a polarization mode of the terminal device based on first information and a best measurement result for the SSB if the SSB includes the first information associated with polarization mode for the SSB.

## Description

### [Technical Field]

The present invention relates to a user equipment and a method.

### [Background]

In the 3rd Generation Partnership Project (3GPP), a radio access method and a radio network for cellular mobile communications (hereinafter, referred to as Long Term Evolution, or Evolved Universal Terrestrial Radio Access) have been studied. In LTE (Long Term Evolution), a base station device is also referred to as an evolved NodeB (eNodeB), and a terminal device is also referred to as a User Equipment (UE). LTE is a cellular communication system in which multiple areas are deployed in a cellular structure, with each of the multiple areas being covered by a base station device. A single base station device may manage multiple cells. Evolved Universal Terrestrial Radio Access is also referred as E-UTRA.

In the 3GPP, the next generation standard (New Radio: NR) has been studied in order to make a proposal to the International-Mobile-Telecommunication-2020 (IMT-2020) which is a standard for the next generation mobile communication system defined by the International Telecommunications Union (ITU). NR has been expected to satisfy a requirement considering three scenarios of enhanced Mobile BroadBand (eMBB), massive Machine Type Communication (mMTC), and Ultra Reliable and Low Latency Communication (URLLC), in a single technology framework.

For example, wireless communication devices may communicate with one or more devices using a communication structure. However, the communication structure used may only offer limited flexibility and/or efficiency. As illustrated by this discussion, systems and methods that improve communication flexibility and/or efficiency may be beneficial.

### [Brief Description of the Drawings]

Figure 1 is a conceptual diagram of a wireless communication system according to an aspect of the present embodiment;
Figure 2 is an example showing the relationship between subcarrier-spacing configuration u, the number of OFDM symbols per slot N^{slot}_{symb,} and the CP configuration according to an aspect of the present embodiment;
Figure 3 is a diagram showing an example of a method of configuring a resource grid according to an aspect of the present embodiment;
Figure 4 is a diagram showing a configuration example of a resource grid 3001 according to an aspect of the present embodiment;
Figure 5 is a schematic block diagram showing a configuration example of the base station device 3 according to an aspect of the present embodiment;
Figure 6 is a schematic block diagram showing a configuration example of the terminal device 1 according to an aspect of the present embodiment; and
Figure 7 is a diagram showing a configuration example of an SS/PBCH block according to an aspect of the present embodiment.

### [DETAILED DESCRIPTION]

A user equipment (UE) is described. The UE may comprise a receiver configured to receive and measure an SSB and a transmitter configured to select a polarization mode of the terminal device based on first information and a best measurement result for the SSB if the SSB includes the first information associated with polarization mode for the SSB and the transmitter is configured to transmit a measurement report including second information associated with the polarization mode for the terminal device and the best measurement result for the SSB.

A method for a user equipment (UE) is described. The method may comprise receiving and measuring an SSB and selecting a polarization mode of the terminal device based on first information and a best measurement result for the SSB if the SSB includes the first information of polarization mode for the SSB and transmitting a measurement report including second information of polarization mode for the terminal device and the best measurement result for the SSB.

floor (CX) may be a floor function for real number CX. For example, floor (CX) may be a function that provides the largest integer within a range that does not exceed the real number CX. ceil (DX) may be a ceiling function to a real number DX. For example, ceil (DX) may be a function that provides the smallest integer within the range not less than the real number DX. mod (EX, FX) may be a function that provides the remainder obtained by dividing EX by FX. mod (EX, FX) may be a function that provides a value which corresponds to the remainder of dividing EX by FX. It is exp (GX) = e ^ GX. Here, e is Napier number. (HX) ^ (IX) indicates IX to the power of HX.

In a wireless communication system according to one aspect of the present embodiment, at least OFDM (Orthogonal Frequency Division Multiplex) is used. An OFDM symbol is a unit of time domain of the OFDM. The OFDM symbol includes at least one or more subcarriers. An OFDM symbol is converted to a time-continuous signal in baseband signal generation. In downlink, at least CP-OFDM (Cyclic Prefix-Orthogonal Frequency Division Multiplex) is used. In uplink, either CP-OFDM or DFT-s-OFDM (Discrete Fourier Transform-spread-Orthogonal Frequency Division Multiplex) is used. DFT-s-OFDM may be given by applying transform precoding to CP-OFDM. CP-OFDM is OFDM using CP (Cyclic Prefix).

Either DFT-s-OFDM or CP-OFDM may be given based whether or not transform precoder (or transform precoding) is enabled. DFT-s-OFDM may be given if the transform precoder is enabled. CP-OFDM may be given if the transform precoder is disabled. E.g., either enabled transform precoder or disabled transform precoder for PUSCH may be indicated based on RRC parameters transformPrecoder in PUSCH-Config or ConfiguredGrantConfig and/or msg3-transformPrecoder in RACH-ConfigCommon.

The OFDM symbol may be a designation including a CP added to the OFDM symbol. That is, an OFDM symbol may be configured to include the OFDM symbol and a CP added to the OFDM symbol.

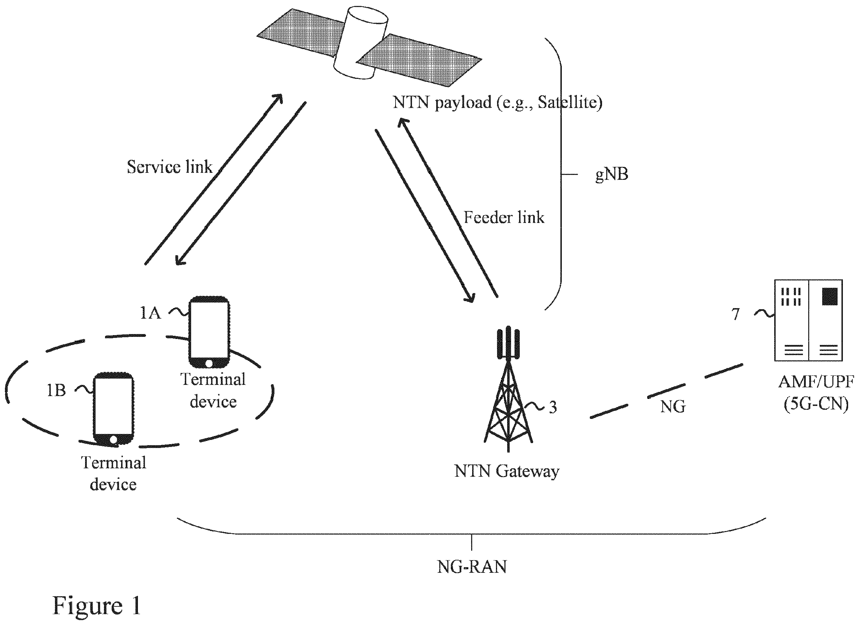

Figure 1 is a conceptual diagram of a wireless communication system according to an aspect of the present embodiment. In Figure 1, the wireless communication system may include one or more terminal device (e.g., terminal devices 1A and 1B) and a gNB including NTN payload (e.g., satellite) and NTN Gateway . Hereinafter, the terminal devices 1A and 1B are also referred to as a terminal device 1 (UE # 1: User Equipment # 1). The base station device 3 may include the gNB. The NTN payload may include a High Altitude Platform Station (HAPS).

The base station device 3 may be configured to include one or more transmission devices (or transmission points, transmission devices, reception devices, transmission points, reception points). When the base station device 3 is configured by a plurality of transmission devices, each of the plurality of transmission devices may be arranged at a different position.

The base station device 3 may be included in the network. Therefore, the base station device 3 may be considered as a part of the network.

The base station device 3 may provide one or more serving cells. A serving cell may be defined as a set of resources used for wireless communication. A serving cell is also referred to as a cell.

The wireless communication system may include the non-terrestrial networks (NTN). The terminal device may include the very small aperture terminal (VSAT).

The NTN may be networks, or segment of networks, using an airborne vehicle to embark a transmission equipment relay node or base station. The networks may be an NG-RAN consisting of gNBs, which provide non-terrestrial NR access to UEs by means of an NTN payload embarked on an airborne or space-borne NTN vehicle and an NTN Gateway. In other word, the base station device may include the satellite(s) and/or the airborne(s). The base station device may be mounted on the satellite and/or airborne.

The NTN Gateway may be an earth station located at the surface of the earth, providing connectivity to the NTN payload using the feeder link. An NTN Gateway may be a TNL node.

The NTN payload may be a network node, embarked on board a satellite or high-altitude platform station, providing connectivity functions, between the service link and the feeder link. The NTN payload may be a TNL node.

The feeder link may be wireless link between the NTN Gateway and the NTN payload.

The service link may be wireless link between the NTN payload and the UE.

The high-altitude platform station may be airborne vehicle embarking the NTN payload placed at an altitude between 8 and 50 km.

Satellite may be a space-borne vehicle orbiting the Earth embarking the NTN payload.

The NTN payload transparently forwards the radio protocol received from the UE (via the service link) to the NTN Gateway (via the feeder link) and vice-versa.

An NTN Gateway may serve multiple NTN payloads and an NTN payload may be served by multiple NTN Gateway.

The NTN Gateway may be connected with the AMF/UPF (Access and Mobility Management Function / User Plane Function) (i.e., 5GCN (5G Core Network)).

The gNBs and ng-eNBs are interconnected with each other by means of the Xn interface. The gNBs and ng-eNBs are also connected by means of the NG interfaces to the 5GC, more specifically to the AMF by means of the NG-C interface and to the UPF by means of the NG-U interface.

For an RRC_CONNECTED UE, when the gNB is configured to ensure that the UE connects to an AMF that serves the country in which the UE is located. If the gNB detects that the UE is in a different country to that served by the serving AMF, then it should perform an NG handover to change to an appropriate AMF or initiate a UE Context Release Request procedure towards the serving AMF (in which case the AMF may decide to de-register the UE).

For NTN, a Tracking Area corresponds to a fixed geographical area. Any respective mapping is configured in the RAN.

Three types of service links are supported. Earth-fixed type is provisioned by beam(s) continuously covering the same geographical areas all the time (e.g., the case of GSO satellites). Quasi-Earth-fixed type is provisioned by beam(s) covering one geographic area for a limited period and a different geographic area during another period (e.g., the case of NGSO satellites generating steerable beams). Earth-moving type is provisioned by beam(s) whose coverage area slides over the Earth surface (e.g., the case of NGSO satellites generating fixed or non-steerable beams). With NGSO satellites, the gNB can provide either quasi-Earth-fixed service link or Earth-moving service link, while gNB operating with GSO satellite can provide Earth fixed service link.

A serving cell may be configured to include at least one downlink component carrier (downlink carrier) and/or one uplink component carrier (uplink carrier). A serving cell may be configured to include at least two or more downlink component carriers and/or two or more uplink component carriers. A downlink component carrier and an uplink component carrier are also referred to as component carriers.

Downlink (DL) may be direct transmission from the base station device 3 to the terminal device(s) 1 using DL physical signal(s) and/or DL physical channel(s).

Uplink (UL) may be direct transmission from the terminal device 1 to the base station device 3 using UL physical signal(s) and/or UL physical channel(s).

For example, one resource grid may be provided for one component carrier. For example, one resource grid may be provided for one component carrier and a subcarrier-spacing configuration u. A subcarrier-spacing configuration u is also referred to as numerology. A resource grid includes N^{size, u}_{grid}, ₓN^{RB}_{sc} subcarriers. The resource grid starts from a common resource block with index N^{start, u}_{grid.} The common resource block with the index N^{start, u}_{grid} is also referred to as a reference point of the resource grid. The resource grid includes N^{subframe, u}_{symb} OFDM symbols. The subscript x indicates the transmission direction and indicates either downlink or uplink. One resource grid is provided for an antenna port p, a subcarrier-spacing configuration u, and a transmission direction x.

Resource grid is also referred to as carrier.

N^{size, u}_{grid,x} and N^{start, u}_{grid} are given based at least on an RRC parameter (e.g. referred to as RRC parameter CarrierBandwidth). The RRC parameter is used to define one or more SCS (SubCarrier-Spacing) specific carriers. One resource grid corresponds to one SCS specific carrier. One component carrier may comprise one or more SCS specific carriers. The SCS specific carrier may be included in a system information block (SIB). For each SCS specific carrier, a subcarrier-spacing configuration u may be provided.

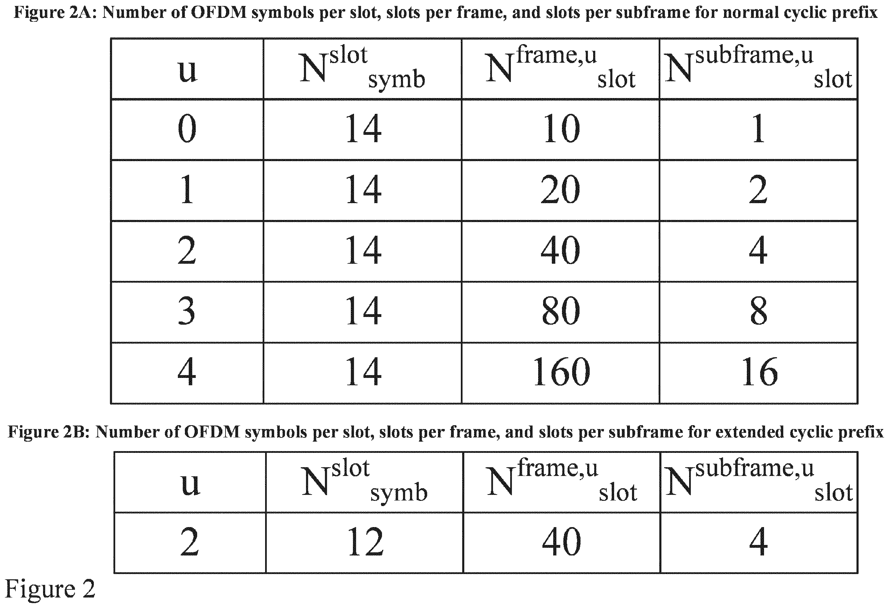

Figure 2 is an example showing the relationship between subcarrier-spacing configuration u, the number of OFDM symbols per slot N^{slot}_{symb}, and the CP configuration according to an aspect of the present embodiment. In Figure 2A, for example, when the subcarrier-spacing configuration u is set to 2 and the CP configuration is set to normal CP (normal cyclic prefix), N^{slot}_{symb} = 14, N^{frame, u}ₛₗₒₜ = 40, N^{subframe, u}ₛₗₒₜ = 4. Further, in Figure 2B, for example, when the subcarrier-spacing configuration u is set to 2 and the CP configuration is set to an extended CP (extended cyclic prefix), N^{slot}_{symb} = 12, N^{frame, u}ₛₗₒₜ = 40, N^{subframe, u}ₛₗₒₜ = 4.

In the wireless communication system according to an aspect of the present embodiment, a time unit T_{c} may be used to represent the length of the time domain. The time unit T_{c} is T_{c} = 1 / (dfₘₐₓ ^{∗} N_{f}). It is dfₘₐₓ = 480 kHz. It is N_{f} = 4096. The constant k is k = dfₘₐₓ ^{∗} N_{f} / (df_{ref}N_{f},_{ref}) = 64. df_{ref} is 15 kHz. N_{f}, _{ref} is 2048.

Transmission of signals in the downlink and/or transmission of signals in the uplink may be organized into radio frames (system frames, frames) of length Tf. It is T_{f} = (dfₘₐₓ N_{f} / 100) ^{∗} Tₛ = 10 ms. One radio frame is configured to include ten subframes. The subframe length is T_{sf} = (dfₘₐₓN_{f} / 1000) Tₛ = 1 ms. The number of OFDM symbols per subframe is N^{subframe, u}symb = N^{slot}symbN^{subframe, u}ₛₗₒₜ.

For a subcarrier-spacing configuration u, the number of slots included in a subframe and indexes may be given. For example, slot index n^{u}ₛ may be given in ascending order with an integer value ranging from 0 to N^{subframe,u}ₛₗₒₜ -1 in a subframe. For subcarrier-spacing configuration u, the number of slots included in a radio frame and indexes of slots included in the radio frame may be given. Also, the slot index n^{u}ₛ, _{f} may be given in ascending order with an integer value ranging from 0 to N^{frame,u}ₛₗₒₜ -1 in the radio frame. Consecutive N^{slot}_{symb} OFDM symbols may be included in one slot. It is N^{slot}_{symb} = 14.

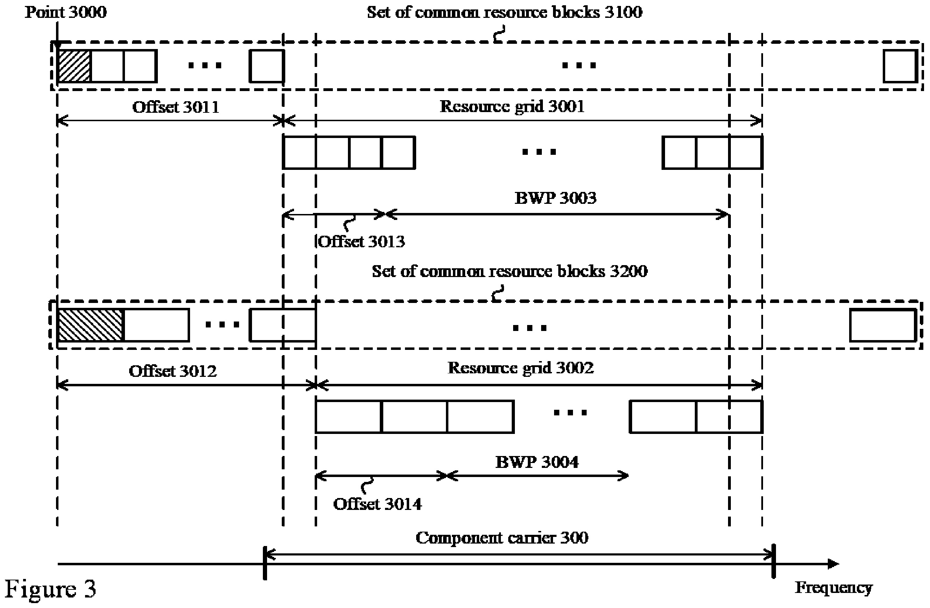

Figure 3 is a diagram showing an example of a method of configuring a resource grid according to an aspect of the present embodiment. The horizontal axis in Figure 3 indicates frequency domain. Figure 3 shows a configuration example of a resource grid of subcarrier-spacing configuration u = u₁ in the component carrier 300 and a configuration example of a resource grid of subcarrier-spacing configuration u = u₂ in a component carrier. One or more subcarrier-spacing configuration may be set for a component carrier. Although it is assumed in Figure 3 that u₁ = u₂-1, various aspects of this embodiment are not limited to the condition of u₁ = u₂-1.

The component carrier 300 is a band having a predetermined width in the frequency domain.

Point 3000 is an identifier for identifying a subcarrier. Point 3000 is also referred to as point A. The common resource block (CRB) set 3100 is a set of common resource blocks for the subcarrier-spacing configuration u₁.

Among the common resource block-set 3100, the common resource block including the point 3000 (the block indicated by the upper right diagonal line in Figure 3) is also referred to as a reference point of the common resource block-set 3100. The reference point of the common resource block-set 3100 may be a common resource block with index 0 in the common resource block-set 3100.

The offset 3011 is an offset from the reference point of the common resource block-set 3100 to the reference point of the resource grid 3001. The offset 3011 is indicated by the number of common resource blocks which is relative to the subcarrier-spacing configuration u₁. The resource grid 3001 includes N^{size,u}_{grid1,x} common resource blocks starting from the reference point of the resource grid 3001.

The offset 3013 is an offset from the reference point of the resource grid 3001 to the reference point (N^{start,u}_{BWP,i1}) of the BWP (BandWidth Part) 3003 of the index il.

Common resource block-set 3200 is a set of common resource blocks with respect to subcarrier-spacing configuration u₂.

A common resource block including the point 3000 (a block indicated by a upper left diagonal line in Figure 3) in the common resource block-set 3200 is also referred to as a reference point of the common resource block-set 3200. The reference point of the common resource block-set 3200 may be a common resource block with index 0 in the common resource block-set 3200.

The offset 3012 is an offset from the reference point of the common resource block-set 3200 to the reference point of the resource grid 3002. The offset 3012 is indicated by the number of common resource blocks for subcarrier-spacing configuration u = u₂. The resource grid 3002 includes N^{size,u}_{grid2,x} common resource blocks starting from the reference point of the resource grid 3002.

The offset 3014 is an offset from the reference point of the resource grid 3002 to the reference point (N^{start,u}_{BWP,i2}) of the BWP 3004 with index i₂.

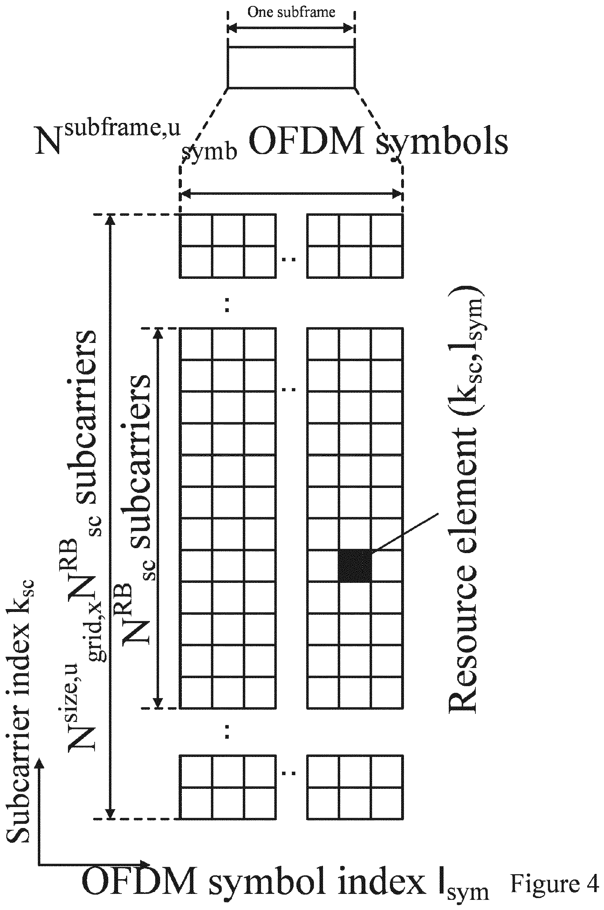

Figure 4 is a diagram showing a configuration example of a resource grid 3001 according to an aspect of the present embodiment. In the resource grid of Figure 4, the horizontal axis indicates OFDM symbol index l_{sym}, and the vertical axis indicates the subcarrier index k_{sc}. The resource grid 3001 includes N^{size,u}_{grid1,}xN^{RB}_{sc} subcarriers, and includes N^{subframes,u}_{symb} OFDM symbols. A resource specified by the subcarrier index k_{sc} and the OFDM symbol index l_{sym} in a resource grid is also referred to as a resource element (RE).

A resource block (RB) includes N^{RB}_{sc} consecutive subcarriers. A resource block is a generic name of a common resource block, a physical resource block (PRB), and a virtual resource block (VRB). It is N^{RB}_{sc} = 12.

A resource block unit is a set of resources that corresponds to one OFDM symbol in one resource block. That is, one resource block unit includes 12 resource elements which corresponds to one OFDM symbol in one resource block.

Common resource blocks for a subcarrier-spacing configuration u are indexed in ascending order from 0 in the frequency domain in a common resource block-set. The common resource block with index 0 for the subcarrier-spacing configuration u includes (or collides with, matches) the point 3000. The index n^{u}_{CRB} of the common resource block with respect to the subcarrier-spacing configuration u satisfies the relationship of n^{u}_{CRB} = ceil (k_{sc} / N^{RB}_{sc}). The subcarrier with k_{sc} = 0 is a subcarrier with the same center frequency as the center frequency of the subcarrier which corresponds to the point 3000.

Physical resource blocks for a subcarrier-spacing configuration u are indexed in ascending order from 0 in the frequency domain in a BWP. The index n^{u}_{PRB} of the physical resource block with respect to the subcarrier-spacing configuration u satisfies the relationship of n^{u}_{CRB} = n^{u}_{PRB} + N^{start,u}_{BWP,i}. The N^{start,u}_{BWP,i} indicates the reference point of BWP with index i.

A BWP is defined as a subset of common resource blocks included in the resource grid. The BWP includes N^{size,u}_{BWP,i} common resource blocks starting from the reference points N^{start,u}_{BWP,i}. A BWP for the downlink component carrier is also referred to as a downlink BWP. A BWP for the uplink component carrier is also referred to as an uplink BWP.

An antenna port is defined such that the channel over which a symbol on the antenna port is conveyed can be inferred from the channel over which another symbol on the same antenna port is conveyed. For example, the channel may correspond to a physical channel. For example, the symbols may correspond to OFDM symbols. For example, the symbols may correspond to resource block units. For example, the symbols may correspond to resource elements.

Two antenna ports are said to be QCL (Quasi Co-Located) if the large-scale properties of the channel over which a symbol on one antenna port is conveyed can be inferred from the channel over which a symbol on the other antenna port is conveyed. The large-scale properties include one or more of delay spread, Doppler spread, Doppler shift, average gain, average delay, and spatial Rx parameters.

Carrier aggregation may be communication using a plurality of aggregated serving cells. Carrier aggregation may be communication using a plurality of aggregated component carriers. Carrier aggregation may be communication using a plurality of aggregated downlink component carriers. Carrier aggregation may be communication using a plurality of aggregated uplink component carriers.

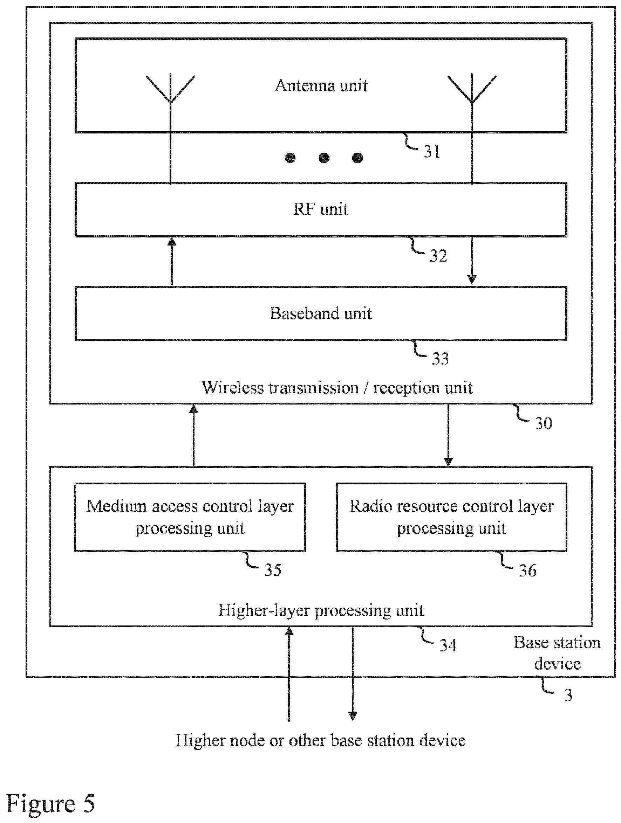

Figure 5 is a schematic block diagram showing a configuration example of the base station device 3 according to an aspect of the present embodiment. As shown in Figure 5, the base station device 3 includes at least a part or all of the wireless transmission / reception unit (physical layer processing unit) 30 and the higher-layer processing unit 34. The wireless transmission / reception unit 30 includes at least a part or all of the antenna unit 31, the RF unit 32 (Radio Frequency unit 32), and the baseband unit 33. The higher-layer processing unit 34 includes at least a part or all of the medium access control layer processing unit 35 and the radio resource control (RRC) layer processing unit 36.

The wireless transmission / reception unit 30 includes at least a part of or all of a wireless transmission unit 30a and a wireless reception unit 30b. The configuration of the baseband unit 33 included in the wireless transmission unit 30a and the configuration of the baseband unit 33 included in the wireless reception unit 30b may be the same or different. The configuration of the RF unit 32 included in the wireless transmission unit 30a and the configuration of the RF unit 32 included in the wireless reception unit 30b may be the same or different. The configuration of the antenna unit 31 included in the wireless transmission unit 30a and the configuration of the antenna unit 31 included in the wireless reception unit 30b may be the same or different.

The antenna unit 31 may include one or more antenna modes of the right hand circular polarization (RHCP) and/or the left hand circular polarization (LHCP) and/or the linear polarization.

The higher-layer processing unit 34 provides downlink data (a transport block) to the wireless transmission / reception unit 30 (or the wireless transmission unit 30a). The higher-layer processing unit 34 performs processing of a medium access control (MAC) layer, a packet data convergence protocol layer (PDCP layer), a radio link control layer (RLC layer) and/or an RRC layer.

The medium access control layer processing unit 35 included in the higher-layer processing unit 34 performs processing of the MAC layer.

The radio resource control layer processing unit 36 included in the higher-layer processing unit 34 performs the process of the RRC layer. The radio resource control layer processing unit 36 manages various configuration information / parameters (RRC parameters) of the terminal device 1. The radio resource control layer processing unit 36 configures an RRC parameter based on the RRC message received from the terminal device 1.

The wireless transmission / reception unit 30 (or the wireless transmission unit 30a) performs processing such as encoding and modulation. The wireless transmission / reception unit 30 (or the wireless transmission unit 30a) generates a physical signal by encoding and modulating the downlink data. The wireless transmission / reception unit 30 (or the wireless transmission unit 30a) converts OFDM symbols in the physical signal to a baseband signal by conversion to a time-continuous signal. The wireless transmission / reception unit 30 (or the wireless transmission unit 30a) transmits the baseband signal (or the physical signal) to the terminal device 1 via radio frequency. The wireless transmission / reception unit 30 (or the wireless transmission unit 30a) may arrange the baseband signal (or the physical signal) on a component carrier and transmit the baseband signal (or the physical signal) to the terminal device 1.

The wireless transmission / reception unit 30 (or the wireless reception unit 30b) performs processing such as demodulation and decoding. The wireless transmission / reception unit 30 (or the wireless reception unit 30b) separates, demodulates and decodes the received physical signal, and provides the decoded information to the higher-layer processing unit 34. The wireless transmission / reception unit 30 (or the wireless reception unit 30b) may perform the channel access procedure prior to the transmission of the physical signal.

The RF unit 32 demodulates the physical signal received via the antenna unit 31 into a baseband signal (down convert), and/or removes extra frequency components. The RF unit 32 provides the processed analog signal to the baseband unit 33.

The baseband unit 33 converts an analog signal (signals on radio frequency) input from the RF unit 32 into a digital signal (a baseband signal). The baseband unit 33 separates a portion which corresponds to CP (Cyclic Prefix) from the digital signal. The baseband unit 33 performs Fast Fourier Transformation (FFT) on the digital signal from which the CP has been removed. The baseband unit 33 provides the physical signal in the frequency domain.

The baseband unit 33 performs Inverse Fast Fourier Transformation (IFFT) on downlink data to generate an OFDM symbol, adds a CP to the generated OFDM symbol, generates a digital signal (baseband signal), and convert the digital signal into an analog signal. The baseband unit 33 provides the analog signal to the RF unit 32.

The RF unit 32 removes extra frequency components from the analog signal (signals on radio frequency) input from the baseband unit 33, up-converts the analog signal to a radio frequency and transmits it via the antenna unit 31. The RF unit 32 may have a function of controlling transmission power. The RF unit 32 is also referred to as a transmission power control unit.

At least one or more serving cells (or one or more component carriers, one or more downlink component carriers, one or more uplink component carriers) may be configured for the terminal device 1.

Each of the serving cells set for the terminal device 1 may be any of PCell (Primary cell), PSCell (Primary SCG cell), and SCell (Secondary Cell).

A PCell is a serving cell included in a MCG (Master Cell Group). A PCell is a cell (implemented cell) which performs an initial connection establishment procedure or a connection re-establishment procedure by the terminal device 1.

A PSCell is a serving cell included in a SCG (Secondary Cell Group). A PSCell is a serving cell in which random-access is performed by the terminal device 1 in a reconfiguration procedure with synchronization (Reconfiguration with synchronization).

A SCell may be included in either a MCG or a SCG.

The serving cell group (cell group) is a designation including at least MCG and SCG. The serving cell group may include one or more serving cells (or one or more component carriers). One or more serving cells (or one or more component carriers) included in the serving cell group may be operated by carrier aggregation.

One or more downlink BWPs may be configured for each serving cell (or each downlink component carrier). One or more uplink BWPs may be configured for each serving cell (or each uplink component carrier).

Among the one or more downlink BWPs set for the serving cell (or the downlink component carrier), one downlink BWP may be set as an active downlink BWP (or one downlink BWP may be activated). Among the one or more uplink BWPs set for the serving cell (or the uplink component carrier), one uplink BWP may be set as an active uplink BWP (or one uplink BWP may be activated).

A PDSCH, a PDCCH, and a CSI-RS may be received in the active downlink BWP. The terminal device 1 may receive the PDSCH, the PDCCH, and the CSI-RS in the active downlink BWP.

APUCCH and a PUSCH may be sent on the active uplink BWP. The terminal device 1 may transmit the PUCCH and the PUSCH in the active uplink BWP.

The PDSCH, the PDCCH, and the CSI-RS may not be received in downlink BWPs (inactive downlink BWPs) other than the active downlink BWP. The terminal device 1 may not receive the PDSCH, the PDCCH, and the CSI-RS in the downlink BWPs which are other than the active downlink BWP.

The PUCCH and the PUSCH do not need to be transmitted in uplink BWPs (inactive uplink BWPs) other than the active uplink BWP. The terminal device 1 may not transmit the PUCCH and the PUSCH in the uplink BWPs which is other than the active uplink BWP.

The inactive downlink BWP and the inactive uplink BWP and the inactive BWP are also referred to as inactive BWP.

Downlink BWP switching deactivates an active downlink BWP and activates one of inactive downlink BWPs which are other than the active downlink BWP. The downlink BWP switching may be controlled by a BWP field included in a downlink control information. The downlink BWP switching may be controlled based on higher-layer parameters.

Uplink BWP switching is used to deactivate an active uplink BWP and activate any inactive uplink BWP which is other than the active uplink BWP. Uplink BWP switching may be controlled by a BWP field included in a downlink control information. The uplink BWP switching may be controlled based on higher-layer parameters.

Among the one or more downlink BWPs set for the serving cell, two or more downlink BWPs may not be set as active downlink BWPs. For the serving cell, one downlink BWP may be active at a certain time.

Among the one or more uplink BWPs set for the serving cell, two or more uplink BWPs may not be set as active uplink BWPs. For the serving cell, one uplink BWP may be active at a certain time.

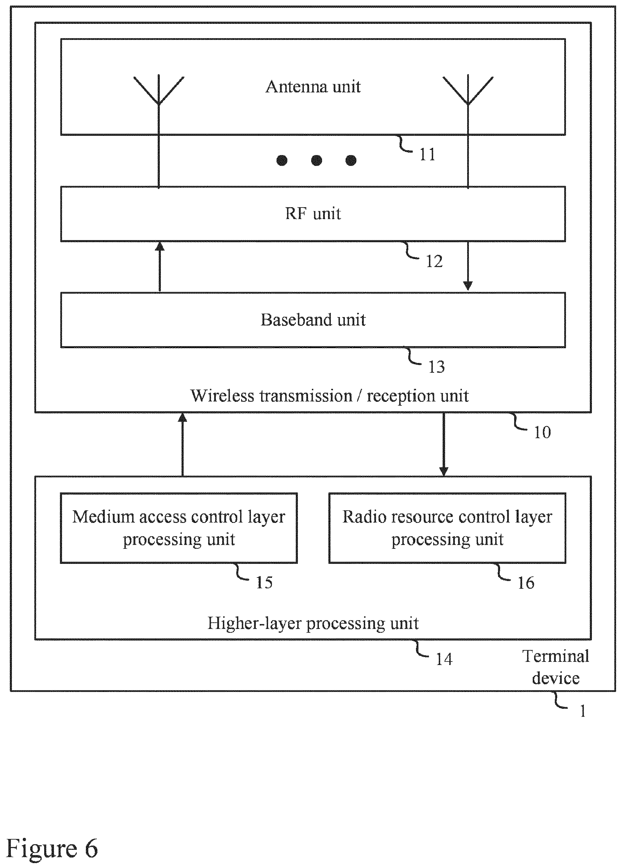

Figure 6 is a schematic block diagram showing a configuration example of the terminal device 1 according to an aspect of the present embodiment. As shown in Figure 6, the terminal device 1 includes at least a part or all of the wireless transmission / reception unit (physical layer processing unit) 10 and the higher-layer processing unit 14. The wireless transmission / reception unit 10 includes at least a part or all of the antenna unit 11, the RF unit 12, and the baseband unit 13. The higher-layer processing unit 14 includes at least a part or all of the medium access control layer processing unit 15 and the radio resource control layer processing unit 16.

The wireless transmission / reception unit 10 includes at least a part of or all of a wireless transmission unit 10a and a wireless reception unit 10b. The configuration of the baseband unit 13 included in the wireless transmission unit 10a and the configuration of the baseband unit 13 included in the wireless reception unit 10b may be the same or different. The configuration of the RF unit 12 included in the wireless transmission unit 10a and the RF unit 12 included in the wireless reception unit 10b may be the same or different. The configuration of the antenna unit 11 included in the wireless transmission unit 10a and the configuration of the antenna unit 11 included in the wireless reception unit 10b may be the same or different.

The antenna unit 11 may include one or more polarization modes (antenna modes) of the right hand circular polarization (RHCP) and/or the left hand circular polarization (LHCP) and/or the linear polarization.

The polarization matching between the terminal device and the base station device is expected to overcome the polarization loss.

The higher-layer processing unit 14 provides uplink data (a transport block) to the wireless transmission / reception unit 10 (or the wireless transmission unit 10a). The higher-layer processing unit 14 performs processing of a MAC layer, a packet data convergence protocol layer, a radio link control layer, and/or an RRC layer.

The medium access control layer processing unit 15 included in the higher-layer processing unit 14 performs processing of the MAC layer.

The radio resource control layer processing unit 16 included in the higher-layer processing unit 14 performs the process of the RRC layer. The radio resource control layer processing unit 16 manages various configuration information / parameters (RRC parameters) of the terminal device 1. The radio resource control layer processing unit 16 configures RRC parameters based on the RRC message received from the base station device 3.

The wireless transmission / reception unit 10 (or the wireless transmission unit 10a) performs processing such as encoding and modulation. The wireless transmission / reception unit 10 (or the wireless transmission unit 10a) generates a physical signal by encoding and modulating the uplink data. The wireless transmission / reception unit 10 (or the wireless transmission unit 10a) converts OFDM symbols in the physical signal to a baseband signal by conversion to a time-continuous signal. The wireless transmission / reception unit 10 (or the wireless transmission unit 10a) transmits the baseband signal (or the physical signal) to the base station device 3 via radio frequency. The wireless transmission / reception unit 10 (or the wireless transmission unit 10a) may arrange the baseband signal (or the physical signal) on a BWP (active uplink BWP) and transmit the baseband signal (or the physical signal) to the base station device 3.

The wireless transmission / reception unit 10 (or the wireless reception unit 10b) performs processing such as demodulation and decoding. The wireless transmission / reception unit 10 (or the wireless reception unit 10b) separates, demodulates and decodes the received physical signal, and provides the decoded information to the higher-layer processing unit 14. The wireless transmission / reception unit 10 (or the wireless reception unit 10b) may perform the channel access procedure prior to the transmission of the physical signal/physical channel.

The RF unit 12 demodulates the physical signal received via the antenna unit 11 into a baseband signal (down convert), and/or removes extra frequency components. The RF unit 12 provides the processed analog signal to the baseband unit 13.

The baseband unit 13 converts an analog signal (signals on radio frequency) input from the RF unit 12 into a digital signal (a baseband signal). The baseband unit 13 separates a portion which corresponds to CP from the digital signal, performs fast Fourier transformation on the digital signal from which the CP has been removed, and provides the physical signal in the frequency domain.

The baseband unit 13 performs inverse fast Fourier transformation on uplink data to generate an OFDM symbol, adds a CP to the generated OFDM symbol, generates a digital signal (baseband signal), and convert the digital signal into an analog signal. The baseband unit 13 provides the analog signal to the RF unit 12.

The RF unit 12 removes extra frequency components from the analog signal (signals on radio frequency) input from the baseband unit 13, up-converts the analog signal to a radio frequency and transmits it via the antenna unit 11 The RF unit 12 may have a function of controlling transmission power. The RF unit 12 is also referred to as a transmission power control unit.

Hereinafter, physical signals (signals) will be described.

An uplink physical channel may correspond to a set of resource elements that carry information originating from the higher-layer and/or uplink control information. The uplink physical channel may be a physical channel used in an uplink component carrier. The uplink physical channel may be transmitted by the terminal device 1. The uplink physical channel may be received by the base station device 3. In the wireless communication system according to one aspect of the present embodiment, at least part or all of PUCCH (Physical Uplink Control CHannel), PUSCH (Physical Uplink Shared CHannel), and PRACH (Physical Random Access CHannel) may be used.

A PUCCH may be used to transmit uplink control information (UCI). The PUCCH may be sent to deliver (transmission, convey) uplink control information. The uplink control information may be mapped to (or arranged in) the PUCCH. The terminal device 1 may transmit PUCCH in which uplink control information is arranged. The base station device 3 may receive the PUCCH in which the uplink control information is arranged.

Uplink control information (UCI, uplink control information bit, uplink control information sequence, uplink control information type) includes at least part or all of channel state information (CSI), scheduling request (SR), and HARQ-ACK (Hybrid Automatic Repeat reQuest ACKnowledgement).

CSI is conveyed by using CSI bits or a CSI sequence. Scheduling request is also referred to as a SR bit or a scheduling request sequence. HARQ-ACK information is also referred to as a HARQ-ACK information bit or a HARQ-ACK information sequence.

HARQ-ACK information may include HARQ-ACK status which corresponds to a transport block (TB, MAC PDU: Medium Access Control Protocol Data Unit, DL-SCH: Downlink-Shared Channel, UL-SCH: Uplink-Shared Channel, PDSCH, PUSCH). The HARQ-ACK status may indicate ACK (acknowledgement) or NACK (negative-acknowledgement) corresponding to the transport block. The ACK may indicate that the transport block has been successfully decoded. The NACK may indicate that the transport block has not been successfully decoded. The HARQ-ACK information may include a HARQ-ACK codebook that includes one or more HARQ-ACK status (or HARQ-ACK bits).

For example, the correspondence between the HARQ-ACK information and the transport block may mean that the HARQ-ACK information and the PDSCH used for transmission of the transport block correspond.

HARQ-ACK status may indicate ACK or NACK which correspond to one CBG (Code Block Group) included in the transport block.

The scheduling request may at least be used to request PUSCH (or UL-SCH) resources for new transmission. The scheduling request may be used to indicate either a positive SR or a negative SR. The fact that the scheduling request indicates a positive SR is also referred to as "a positive SR is sent". The positive SR may indicate that the PUSCH (or UL-SCH) resource for initial transmission is requested by the terminal device 1. A positive SR may indicate that a higher-layer is to trigger a scheduling request. The positive SR may be sent when the higher-layer instructs to send a scheduling request. The fact that the scheduling request bit indicates a negative SR is also referred to as "a negative SR is sent". A negative SR may indicate that the PUSCH (or UL-SCH) resource for initial transmission is not requested by the terminal device 1. A negative SR may indicate that the higher-layer does not trigger a scheduling request. A negative SR may be sent if the higher-layer is not instructed to send a scheduling request.

The channel state information may include at least part or all of a channel quality indicator (CQI), a precoder matrix indicator (PMI), and a rank indicator (RI). CQI is an indicator related to channel quality (e.g., propagation quality) or physical channel quality, and PMI is an indicator related to a precoder. RI is an indicator related to transmission rank (or the number of transmission layers).

CSI may be provided at least based on receiving one or more physical signals (e.g., one or more CSI-RSs) used at least for channel measurement. The CSI may be selected by the terminal device 1 at least based on receiving one or more physical signals used for channel measurement. Channel measurements may include interference measurements.

A PUCCH may correspond to a PUCCH format. A PUCCH may be a set of resource elements used to convey a PUCCH format. A PUCCH may include a PUCCH format. A PUCCH format may include UCI.

A PUSCH may be used to transmit uplink data (a transport block) and/or uplink control information. A PUSCH may be used to transmit uplink data corresponding to a UL-SCH and/or uplink control information. A PUSCH may be used to convey uplink data and/or uplink control information. A PUSCH may be used to convey uplink data corresponding to a UL-SCH and/or uplink control information. Uplink data may be arranged in a PUSCH. Uplink data corresponding to UL-SCH may be arranged in a PUSCH. Uplink control information may be arranged to a PUSCH. The terminal device 1 may transmit a PUSCH in which uplink data and/or uplink control information is arranged. The base station device 3 may receive a PUSCH in which uplink data and/or uplink control information is arranged.

APRACH may be used to transmit a random-access preamble. The PRACH may be used to convey a random-access preamble. The base station device 3 may receive the PRACH.

For a given PRACH opportunity, 64 random-access preambles are defined. The random-access preamble is specified (determined, given) at least based on the cyclic shift Cᵥ of the PRACH and the sequence index u for the PRACH.

An uplink physical signal may correspond to a set of resource elements. The uplink physical signal may not carry information generated in the higher-layer. The uplink physical signal may be a physical signal used in the uplink component carrier. The terminal device 1 may transmit an uplink physical signal. The base station device 3 may receive the uplink physical signal. In the radio communication system according to one aspect of the present embodiment, at least a part or all of UL DMRS (UpLink Demodulation Reference Signal), SRS (Sounding Reference Signal), UL PTRS (UpLink Phase Tracking Reference Signal) may be used.

UL DMRS is a generic name of a DMRS for a PUSCH and a DMRS for a PUCCH.

Transmission of a PUSCH and transmission of a DMRS for the PUSCH may be indicated (or scheduled) by one DCI format. The PUSCH and the DMRS for the PUSCH may be collectively referred to as a PUSCH. Transmission of the PUSCH may be transmission of the PUSCH and the DMRS for the PUSCH.

A PUSCH may be estimated from a DMRS for the PUSCH. That is, propagation path of the PUSCH may be estimated from the DMRS for the PUSCH.

Transmission of a PUCCH and transmission of a DMRS for the PUCCH may be indicated (or triggered) by one DCI format. The arrangement of the PUCCH in resource elements (resource element mapping) and/or the arrangement of the DMRS in resource elements for the PUCCH may be provided at least by one PUCCH format. The PUCCH and the DMRS for the PUCCH may be collectively referred to as PUCCH. Transmission of the PUCCH may be transmission of the PUCCH and the DMRS for the PUCCH.

A PUCCH may be estimated from a DMRS for the PUCCH. That is, propagation path of the PUCCH may be estimated from the DMRS for the PUCCH.

A downlink physical channel may correspond to a set of resource elements that carry information originating from the higher-layer and/or downlink control information. The downlink physical channel may be a physical channel used in the downlink component carrier. The base station device 3 may transmit the downlink physical channel. The terminal device 1 may receive the downlink physical channel. In the wireless communication system according to one aspect of the present embodiment, at least a part or all of PBCH (Physical Broadcast Channel), PDCCH (Physical Downlink Control Channel), and PDSCH (Physical Downlink Shared Channel) may be used.

The PBCH may be used to transmit a MIB (Master Information Block) and/or physical layer control information. The physical layer control information is a kind of downlink control information. The PBCH may be sent to deliver the MIB and/or the physical layer control information. A BCH may be mapped (or corresponding) to the PBCH. The terminal device 1 may receive the PBCH. The base station device 3 may transmit the PBCH. The physical layer control information is also referred to as a PBCH payload and a PBCH payload related to timing. The MIB may include one or more higher-layer parameters.

Physical layer control information includes 8 bits. The physical layer control information may include at least part or all of 0A to 0D. The 0A is radio frame information. The 0B is half radio frame information (half system frame information). The 0C is SS/PBCH block index information. The 0D is subcarrier offset information.

The radio frame information is used to indicate a radio frame in which the PBCH is transmitted (a radio frame including a slot in which the PBCH is transmitted). The radio frame information is represented by 4 bits. The radio frame information may be represented by 4 bits of a radio frame indicator. The radio frame indicator may include 10 bits. For example, the radio frame indicator may at least be used to identify a radio frame from index 0 to index 1023.

The half radio frame information is used to indicate whether the PBCH is transmitted in first five subframes or in second five subframes among radio frames in which the PBCH is transmitted. Here, the half radio frame may be configured to include five subframes. The half radio frame may be configured by five subframes of the first half of ten subframes included in the radio frame. The half radio frame may be configured by five subframes in the second half of ten subframes included in the radio frame.

The SS/PBCH block index information is used to indicate an SS/PBCH block index. The SS/PBCH block index information may be represented by 3 bits. The SS/PBCH block index information may consist of 3 bits of an SS/PBCH block index indicator. The SS/PBCH block index indicator may include 6 bits. The SS/PBCH block index indicator may at least be used to identify an SS/PBCH block from index 0 to index 63 (or from index 0 to index 3, from index 0 to index 7, from index 0 to index 9, from index 0 to index 19, etc.).

The subcarrier offset information is used to indicate subcarrier offset. The subcarrier offset information may be used to indicate the difference between the first subcarrier in which the PBCH is arranged and the first subcarrier in which the control resource set with index 0 is arranged.

A PDCCH may be used to transmit downlink control information (DCI). A PDCCH may be transmitted to deliver downlink control information. Downlink control information may be mapped to a PDCCH. The terminal device 1 may receive a PDCCH in which downlink control information is arranged. The base station device 3 may transmit the PDCCH in which the downlink control information is arranged.

Downlink control information may correspond to a DCI format. Downlink control information may be included in a DCI format. Downlink control information may be arranged in each field of a DCI format.

DCI format is a generic name for DCI format 0_0, DCI format 0_1, DCI format 1_0, and DCI format 1_1. Uplink DCI format is a generic name of the DCI format 0_0 and the DCI format 0_1. Downlink DCI format is a generic name of the DCI format 1_0 and the DCI format 1_1.

DCI format 0_0 is used for the scheduling of PUSCH in one cell.

DCI format 0_1 is used for the scheduling of one or multiple PUSCH in one cell or indicating CG downlink feedback information (CG-DFI) to a UE.

DCI format 1_0 is used for the scheduling of PDSCH in one DL cell.

DCI format 1_1 is used for the scheduling of one or multiple PDSCH in one cell.

The DCI format 1_0 is at least used for scheduling of a PDSCH for a cell (arranged on a cell). The DCI format 1_0 includes at least a part or all of fields 3A to 3F. The 3A is a DCI format identification field. The 3B is a frequency domain resource assignment field. The 3C is a time domain resource assignment field. The 3D is an MCS field. The 3E is a PDSCH-to-HARQ-feedback indicator field. The 3F is a PUCCH resource indicator field.

The DCI format 1_1 is at least used for scheduling of a PDSCH for a cell (or arranged on a cell). The DCI format 1_1 includes at least a part or all of fields 4A to 4H. The 4Ais a DCI format identification field. The 4B is a frequency domain resource assignment field. The 4C is a time domain resource assignment field. The 4D is an MCS field. The 4E is a PDSCH-to-HARQ-feedback indicator field. The 4F is a PUCCH resource indicator field. The 4G is a BWP field. The 4H is a carrier indicator field.

If the DCI format 1_1 includes the carrier indicator field, the carrier indicator field may be used to indicate a downlink component carrier (or a serving cell) on which a PDSCH is arranged. When the DCI format 1_1 does not include the carrier indicator field, a downlink component carrier (or a serving cell) on which a PDSCH is arranged may be the same as a downlink component carrier (or a serving cell) on which a PDCCH including the DCI format 1_1 used for scheduling of the PDSCH is arranged. When the number of downlink component carriers (or the number of serving cells) configured in the terminal device 1 in a serving cell group is two or more (when downlink carrier aggregation is operated in a serving cell group), or when cross-carrier scheduling is configured for the serving cell group, the number of bits for the carrier indicator field included in the DCI format 1_1 used for scheduling a PDSCH arranged on the serving cell group may be one or more (e.g., 3). When the number of downlink component carriers (or the number of serving cells) configured in the terminal device 1 in a serving cell group is one (or when downlink carrier aggregation is not operated in a serving cell group), or when the cross-carrier scheduling is not configured for the serving cell group, the number of bits for the carrier indicator field included in the DCI format 1_1 used for scheduling of a PDSCH arranged on the serving cell group may be zero.

A PDSCH may be used to transmit one or more transport blocks. A PDSCH may be used to transmit one or more transport blocks which corresponds to a DL-SCH. A PDSCH may be used to convey one or more transport blocks. APDSCH may be used to convey one or more transport blocks which corresponds to a DL-SCH. One or more transport blocks may be arranged in a PDSCH. One or more transport blocks which corresponds to a DL-SCH may be arranged in a PDSCH. The base station device 3 may transmit a PDSCH. The terminal device 1 may receive the PDSCH.

Downlink physical signals may correspond to a set of resource elements. The downlink physical signals may not carry the information generated in the higher-layer. The downlink physical signals may be physical signals used in the downlink component carrier. A downlink physical signal may be transmitted by the base station device 3. The downlink physical signal may be transmitted by the terminal device 1. In the wireless communication system according to one aspect of the present embodiment, at least a part or all of an SS (Synchronization signal), DL DMRS (DownLink DeModulation Reference Signal), CSI-RS (Channel State Information-Reference Signal), and DL PTRS (DownLink Phase Tracking Reference Signal) may be used.

The synchronization signal may be used at least for the terminal device 1 to synchronize in the frequency domain and/or time domain for downlink. The synchronization signal is a generic name of PSS (Primary Synchronization Signal) and SSS (Secondary Synchronization Signal).

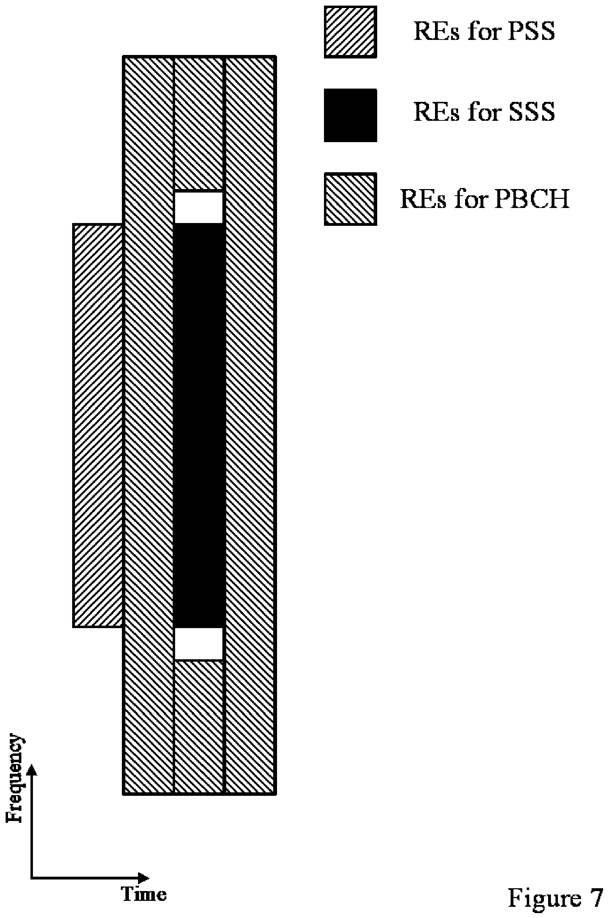

Figure 7 is a diagram showing a configuration example of an SS/PBCH block according to an aspect of the present embodiment. In Figure 7, the horizontal axis indicates time domain (OFDM symbol index l_{sym}), and the vertical axis indicates frequency domain. The shaded blocks indicate a set of resource elements for a PSS. The blocks of grid lines indicate a set of resource elements for an SSS. Also, the blocks in the horizontal line indicate a set of resource elements for a PBCH and a set of resource elements for a DMRS for the PBCH (DMRS related to the PBCH, DMRS included in the PBCH, DMRS which corresponds to the PBCH).

As shown in Figure 7, the SS/PBCH block includes a PSS, an SSS, and a PBCH. The SS/PBCH block includes 4 consecutive OFDM symbols. The SS/PBCH block includes 240 subcarriers. The PSS is allocated to the 57th to 183rd subcarriers in the first OFDM symbol. The SSS is allocated to the 57th to 183rd subcarriers in the third OFDM symbol. The first to 56th subcarriers of the first OFDM symbol may be set to zero. The 184th to 240th subcarriers of the first OFDM symbol may be set to zero. The 49th to 56th subcarriers of the third OFDM symbol may be set to zero. The 184th to 192nd subcarriers of the third OFDM symbol may be set to zero. In the first to 240th subcarriers of the second OFDM symbol, the PBCH is allocated to subcarriers in which the DMRS for the PBCH is not allocated. In the first to 48th subcarriers of the third OFDM symbol, the PBCH is allocated to subcarriers in which the DMRS for the PBCH is not allocated. In the 193rd to 240th subcarriers of the third OFDM symbol, the PBCH is allocated to subcarriers in which the DMRS for the PBCH is not allocated. In the first to 240th subcarriers of the 4th OFDM symbol, the PBCH is allocated to subcarriers in which the DMRS for the PBCH is not allocated.

The antenna ports of a PSS, an SSS, a PBCH, and a DMRS for the PBCH in an SS/PBCH block may be identical.

A PBCH may be estimated from a DMRS for the PBCH For the DM-RS for the PBCH, the channel over which a symbol for the PBCH on an antenna port is conveyed can be inferred from the channel over which another symbol for the DM-RS on the antenna port is conveyed only if the two symbols are within a SS/PBCH block transmitted within the same slot, and with the same SS/PBCH block index.

DL DMRS is a generic name of DMRS for a PBCH, DMRS for a PDSCH, and DMRS for a PDCCH.

A set of antenna ports for a DMRS for a PDSCH (a DMRS associated with a PDSCH, a DMRS included in a PDSCH, a DMRS which corresponds to a PDSCH) may be given based on the set of antenna ports for the PDSCH. The set of antenna ports for the DMRS for the PDSCH may be the same as the set of antenna ports for the PDSCH.

Transmission of a PDSCH and transmission of a DMRS for the PDSCH may be indicated (or scheduled) by one DCI format. The PDSCH and the DMRS for the PDSCH may be collectively referred to as PDSCH. Transmitting a PDSCH may be transmitting a PDSCH and a DMRS for the PDSCH.

APDSCH may be estimated from a DMRS for the PDSCH. For a DM-RS associated with a PDSCH, the channel over which a symbol for the PDSCH on one antenna port is conveyed can be inferred from the channel over which another symbol for the DM-RS on the antenna port is conveyed only if the two symbols are within the same resource as the scheduled PDSCH, in the same slot, and in the same PRG (Precoding Resource Group).

Antenna ports for a DMRS for a PDCCH (a DMRS associated with a PDCCH, a DMRS included in a PDCCH, a DMRS which corresponds to a PDCCH) may be the same as an antenna port for the PDCCH.

A PDCCH may be estimated from a DMRS for the PDCCH. For a DM-RS associated with a PDCCH, the channel over which a symbol for the PDCCH on one antenna port is conveyed can be inferred from the channel over which another symbol for the DM-RS on the same antenna port is conveyed only if the two symbols are within resources for which the UE may assume the same precoding being used (i.e. within resources in a REG bundle).

A BCH (Broadcast CHannel), a UL-SCH (Uplink-Shared CHannel) and a DL-SCH (Downlink-Shared CHannel) are transport channels. A channel used in the MAC layer is called a transport channel. A unit of transport channel used in the MAC layer is also called transport block (TB) or MAC PDU (Protocol Data Unit). In the MAC layer, control of HARQ (Hybrid Automatic Repeat request) is performed for each transport block. The transport block is a unit of data delivered by the MAC layer to the physical layer. In the physical layer, transport blocks are mapped to codewords and modulation processing is performed for each codeword.

One UL-SCH and one DL-SCH may be provided for each serving cell. BCH may be given to PCell. BCH may not be given to PSCell and SCell.

ABCCH (Broadcast Control CHannel), a CCCH (Common Control CHannel), and a DCCH (Dedicated Control CHannel) are logical channels. The BCCH is a channel of the RRC layer used to deliver MIB or system information. The CCCH may be used to transmit a common RRC message in a plurality of terminal devices 1. The CCCH may be used for the terminal device 1 which is not connected by RRC. The DCCH may be used at least to transmit a dedicated RRC message to the terminal device 1. The DCCH may be used for the terminal device 1 that is in RRC-connected mode.

The RRC message includes one or more RRC parameters (information elements, higher layer parameters). For example, the RRC message may include a MIB. For example, the RRC message may include system information (SIB: System Information Block, MIB). SIB is a generic name for various type of SIBs (e.g., SIB1, SIB2). For example, the RRC message may include a message which corresponds to a CCCH. For example, the RRC message may include a message which corresponds to a DCCH. RRC message is a general term for common RRC message and dedicated RRC message.

For NTN, other SI may include SIB 19 containing NTN-specific parameters for serving cell and/neighbour cells.

The BCCH in the logical channel may be mapped to the BCH or the DL-SCH in the transport channel. The CCCH in the logical channel may be mapped to the DL-SCH or the UL-SCH in the transport channel. The DCCH in the logical channel may be mapped to the DL-SCH or the UL-SCH in the transport channel.

The UL-SCH in the transport channel may be mapped to a PUSCH in the physical channel. The DL-SCH in the transport channel may be mapped to a PDSCH in the physical channel. The BCH in the transport channel may be mapped to a PBCH in the physical channel.

A higher-layer parameter is a parameter included in an RRC message or a MAC CE (Medium Access Control Control Element). The higher-layer parameter is a generic name of information included in a MIB, system information, a message which corresponds to CCCH, a message which corresponds to DCCH, and a MAC CE. A higher-layer parameter may be referred to as an RRC parameter or an RRC configuration if the higher-layer parameter is the parameter included in the RRC message.

A higher-layer parameter may be a cell-specific parameter or a UE-specific parameter. A cell-specific parameter is a parameter including a common configuration in a cell. A UE-specific parameter is a parameter including a configuration that may be configured differently for each UE.

The base station device may indicate change of cell-specific parameters by reconfiguration with random-access. The UE may change cell-specific parameters before triggering random-access. The base station device may indicate change of UE-specific parameters by reconfiguration with or without random-access. The UE may change UE-specific parameters before or after random-access.

The procedure performed by the terminal device 1 includes at least a part or all of the following 5A to 5C. The 5A is cell search. The 5B is random-access. The 5C is data communication.

The cell search is a procedure used by the terminal device 1 to synchronize with a cell in the time domain and/or the frequency domain and to detect a physical cell identity. The terminal device 1 may detect the physical cell ID by performing synchronization of time domain and/or frequency domain with a cell by the cell search.

A sequence of a PSS is given based at least on a physical cell ID. A sequence of an SSS is given based at least on the physical cell ID.

An SS/PBCH block candidate indicates a resource for which transmission of the SS/PBCH block may exist. An SS/PBCH block may be transmitted at a resource indicated as the SS/PBCH block candidate. The base station device 3 may transmit an SS/PBCH block at an SS/PBCH block candidate. The terminal device 1 may receive (detect) the SS/PBCH block at the SS/PBCH block candidate.

A set of SS/PBCH block candidates in a half radio frame is also referred to as an SS-burst-set. The SS-burst-set is also referred to as a transmission window, a SS transmission window, or a DRS transmission window (Discovery Reference Signal transmission window). The SS-burst-set is a generic name that includes at least a first SS-burst-set and a second SS-burst-set.

The base station device 3 transmits SS/PBCH blocks of one or more indexes at a predetermined cycle. The terminal device 1 may detect an SS/PBCH block of at least one of the SS/PBCH blocks of the one or more indexes. The terminal device 1 may attempt to decode the PBCH included in the SS/PBCH block. The SS/PBCH block(s) may be referred to as the SSB(s).

Data communication is a generic term for downlink communication and uplink communication.

In data communication, the terminal device 1 attempts to detect a PDCCH (attempts to monitor a PDCCH, monitors a PDCCH). In a resource identified at least based on one or all of a control resource set and a search-space-set. It's also called as "the terminal device 1 attempts to detect a PDCCH in a control resource set", "the terminal device 1 attempts to detect a PDCCH in a search-space-set", "the terminal device 1 attempts to detect a PDCCH candidate in a control resource set", "the terminal device 1 attempts to detect a PDCCH candidate in a search-space-set", "the terminal device 1 attempts to detect a DCI format in a control resource set", or "the terminal device 1 attempts to detect a DCI format in a search-space-set". Monitoring a PDCCH may be equivalent as monitoring a DCI format in the PDCCH.

The control resource set is a set of resources configured by the number of resource blocks and a predetermined number of OFDM symbols in a slot.

The set of resources for the control resource set may be indicated by higher-layer parameters. The number of OFDM symbols included in the control resource set may be indicated by higher-layer parameters.

A PDCCH may be also called as a PDCCH candidate.

A search-space-set is defined as a set of PDCCH candidates. A search-space-set may be a Common Search Space (CSS) set or a UE-specific Search Space (USS) set.

In downlink communication, the terminal device 1 may detect a downlink DCI format. The detected downlink DCI format is at least used for resource assignment for a PDSCH. The detected downlink DCI format is also referred to as downlink assignment. The terminal device 1 attempts to receive the PDSCH. Based on a PUCCH resource indicated based on the detected downlink DCI format, an HARQ-ACK corresponding to the PDSCH (HARQ-ACK corresponding to a transport block included in the PDSCH) may be reported to the base station device 3.

In uplink communication, the terminal device 1 may detect an uplink DCI format. The detected uplink DCI format is at least used for resource assignment for a PUSCH. The detected uplink DCI format is also referred to as uplink grant. The terminal device 1 transmits the PUSCH.

PUSCH transmission(s) can be dynamically scheduled by an UL grant in a DCI, or the transmission can correspond to a configured grant Type 1 or Type 2. The configured grant Type 1 PUSCH transmission is semi-statically configured to operate upon the reception of higher layer parameter of configuredGrantConfig including rrc-ConfiguredUplinkGrant without the detection of an UL grant in a DCI. The configured grant Type 2 PUSCH transmission is semi-persistently scheduled by an UL grant in a valid activation DCI according to those procedure(s) after the reception of higher layer parameter configuredGrantConfig not including rrc-ConfiguredUplinkGrant. If configuredGrantConfigToAddModList is configured, more than one configured grant configuration of configured grant Type 1 and/or configured grant Type 2 may be active at the same time on an active BWP of a serving cell.

The RRC parameter NTN-Config provides one or more parameters needed for the UE to access NR via NTN access.

The NTN-Config may include at least one of the epochTime, ntn-Ul Sync Validity Duration, cellSpecificKoffset, kmac, ta-Info, ntn-PolarizationDL, ntn-PolarizationUL, ephemerisInfo, and/or ta-Report.

The epochTime indicates the epoch time for the NTN assistance information.

The ntn-Ul Sync Validity Duration is a validity duration configured by the network for assistance information (i.e., Serving and/or neighbour satellite ephemeris and Common TA parameters) which indicates the maximum time during which the UE can apply assistance information without having acquired new assistance information.

The cellSpecificKoffset is a scheduling offset used for the timing relationships that are modified for NTN.

The kmac is a scheduling offset provided by network if downlink and uplink frame timing are not aligned at gNB.

The ta-Info may include ta-Common, ta-CommonDrift, and/or ta-CommonDrift Variant. The ta-Common is a network-controlled common timing advanced value and it may include any timing offset considered necessary by the network. The ta-CommonDrift indicates drift rate of the common TA. The ta-CommonDrift Variant indicates drift rate variation of the common TA.

The ntn-PolarizationDL indicates polarization information (RHCP, LHCP, Linear polarization) for downlink transmission on service link.

The ntn-PolarizationUL indicates polarization information (RHCP, LHCP, Linear polarization) for uplink transmission on service link. If this parameter is not present and the ntn-PolarizationDL is present, the UE assumes the same polarization for UL and DL.

The ephemerisInfo provides satellite ephemeris either in format of position and velocity state vector or in format of orbital parameters.

The ta-Report indicates reporting of timing advanced is enabled during Random Access due to RRC connection establishment or RRC connection resume, and during RRC connection reestablishment when this parameter is included in SIB 19. The ta-Report indicates TA reporting is enabled during Random Access due to reconfiguration with sync when this parameter is included in ServingCellConfigCommon within dedicated signalling.

Upon receiving SIB 19, the UE shall start or restart T430 for serving cell with the timer value set to ntn-U1SyncValidityDuration from the subframe indicated by epochTime.

A UE capable of NTN access may acquire SIB 1 to determine whether the cell is an NTN cell.

If the UE receives SSB including the first information associated with the polarization mode for the SSB, the UE may select the polarization mode for the UE based on the first information and the best measurement result for the SSB, and the UE may transmit the measurement report including the second information of the polarization mode for the UE and the best measurement result for the SSB. The second information of the polarization mode for the UE may be determine based on the UE capability. The second information may include the polarization mode of the UE associated with the best measurement result.

If the UE receives SSB including the first information associated with the polarization mode for the SSB, the UE may include the second information in the measurement report. Otherwise, the UE may not include the second information in the measurement report.

An RRC_CONNECTED UE shall derive cell measurement results by measuring one or multiple beams associated per cell as configured by the network including the gNB. For all cell measurement results, except for RSSI (Received Signal Strength Indicator), and CLI (Cross Link Interference) measurement results in RRC_CONNECTED, the UE applies the layer 3 filtering, before using the measured results for evaluation of reporting criteria, measurement reporting or the criteria to trigger conditional reconfiguration execution. For cell measurements, the network can configure RSRP (Reference Signal Received Power), RSRQ (Reference Signal Received Quality), SINR (Signal to Noise and Interference Ratio), RSCP (Received Signal Code Power) or EcN0 as trigger quantity. For CLI measurements, the network can configure SRS-RSRP or CLI-RSSI as trigger quantity. For cell and beam measurements, reporting quantities can be any combination of quantities (i.e., only RSRP; only RSRQ; only SINR; RSRP and RSRQ; RSRP and SINR; RSRQ and SINR; RSRP, RSRQ and SINR; only RSCP; only EcN0; RSCP and EcN0), irrespective of the trigger quantity, and for CLI measurements, reporting quantities can be either SRS-RSRP or CLI-RSSI. For conditional reconfiguration execution, the network can configure up to 2 quantities, both using same RS type. The UE does not apply the layer 3 filtering to derive the CBR measurements. The UE does not apply the layer 3 filtering to derive the Rx-Tx time difference measurements.

The RSRP/RSRQ may include SS-RSRP/RSRQ and CSI-RSRP/RSRQ.

The SS-RSRP is defined as the linear average over the power contributions (in [W]) of the resource elements that carry secondary synchronization signals. The measurement time resource(s) for SS-RSRP are confined within SS/PBCH Block Measurement Time Configuration (SMTC) window duration. If SS-RSRP is used for L1-RSRP as configured by reporting configurations, the measurement time resources(s) restriction by SMTC window duration is not applicable.

The CSI-RSRP is defined as the linear average over the power contributions (in [W]) of the resource elements of the antenna port(s) that carry CSI reference signals configured for RSRP measurements within the considered measurement frequency bandwidth in the configured CSI-RS occasions.

The SS-RSRQ is defined as the ratio of N×SS-RSRP / NR carrier RSSI, where N is the number of resource blocks in the NR carrier RSSI measurement bandwidth. The measurements in the numerator and denominator shall be made over the same set of resource blocks. The SS-RSRQ comprises the linear average of the total received power (in [W]) observed only in certain OFDM symbols of measurement time resource(s), in the measurement bandwidth, over N number of resource blocks from all sources, including co-channel serving and non-serving cells, adjacent channel interference, thermal noise etc.

The CSI-RSRQ is defined as the ratio of N×CSI-RSRP to CSI-RSSI, where N is the number of resource blocks in the CSI-RSSI measurement bandwidth. The measurements in the numerator and denominator shall be made over the same set of resource blocks. The CSI-RSRQ comprises the linear average of the total received power (in [W]) observed only in OFDM symbols of measurement time resource(s), in the measurement bandwidth, over N number of resource blocks from all sources, including co-channel serving and non-serving cells, adjacent channel interference, thermal noise etc. The measurement time resource(s) for CSI-RSSI corresponds to OFDM symbols containing configured CSI-RS occasions.

The RSSI comprises the linear average of the total received power (in [W]) observed only per configured OFDM symbol and in the measurement bandwidth indicated by higher layers or corresponding to the channel bandwidth, where the channel has the center frequency configured by ARFCN-valueNR, by the UE from all sources, including co-channel serving and non-serving cells, adjacent channel interference, thermal noise etc.

The measurement report may include measurement result(s) provided by the UE.

The gNB may re-select the applicable polarization mode for the DL transmission based on the second information provided by the UE.

The UE may measure the received power of the SSB. The UE may report the measurement result for the received power of the SSB.

The second information may indicate whether or not the polarization loss included if the UE is known to the polarization mode for the SSB. The second information may be included in the measurement result provided by the UE.

For example, if the UE is a VSAT UE, the UE may support at least one or both of RHCP and/or LHCP according to a capability/feature of the UE. Also, the UE may support at least one or both of circular polarization and/or linear polarization according to a capability/feature of the UE. The UE may notify one or more supported polarization mode as the UE capability.

If the UE can receive one SSB using two or more polarization modes (e.g., RHCP and LHCP), the UE may select a better measurement result among the two or more polarization mode and the UE may set the second information to a better polarization mode.

If the UE can receive one SSB using two or more polarization modes (e.g., RHCP and LHCP), or if the SSB include indication of reception of the SSB using two or more polarization modes, the UE may perform the measurement of the SSB and the UE may transmit the measurement report including the measurement results corresponding to each of one or more polarization modes.

If the SSB includes an indication of DL reception mode associated with the polarization modes, the UE may transmit a measurement report including one or more measurement results based on the indication.

If the UE supports more than one polarization modes and repetition mode of the UL transmission, the UE may perform the repetition of the UL transmission with the polarization mode switching based on a first RRC parameter provided by the gNB. For example, if the UE supports both RHCP and LHCP (i.e., multiple polarization modes), the UE may switch the polarization mode for the UL transmission according to the UL transmission timing. The switching pattern of the polarization modes may be determined based on the first RRC parameter and/or the second RRC parameter provided by the gNB.

The switching pattern of the polarization modes may include one or more switching pattern corresponding to each of the DL reception and the UL transmission. The switching pattern may indicate a pattern switching the polarization modes per slot (or per slot group) over the repetition (i.e., multi-slots) for the DL reception and/or the UL transmission.

The UE may perform the UL transmission(s) in the transmission timing according to the polarization mode for the UE configured based on the first information if the UE receives SSB including the first information associated with the polarization mode for the SSB.

The UE may perform the UL transmission(s) in the transmission timing according to the polarization mode for the UE configured based on the first information if the UE receives SSB including the switching pattern associated with the polarization mode for the UL transmissions.

The UE may perform the DL reception(s) in the reception timing according to the polarization mode for the UE configured based on the first information if the UE receives SSB including the switching pattern associated with the polarization mode for the DL reception.

Each of a program running on the base station device and the terminal device according to an aspect of the present invention may be a program that controls a Central Processing Unit (CPU) and the like, such that the program causes a computer to operate in such a manner as to realize the functions of the above-described embodiment according to the present invention. The information handled in these devices is transitorily stored in a Random-Access-Memory (RAM) while being processed. Thereafter, the information is stored in various types of Read-Only-Memory (ROM) such as a Flash ROM and a Hard-Disk-Drive (HDD), and when necessary, is read by the CPU to be modified or rewritten.

Note that the terminal device 1 and the base station device 3 according to the above-described embodiment may be partially achieved by a computer. In this case, this configuration may be realized by recording a program for realizing such control functions on a computer-readable recording medium and causing a computer system to read the program recorded on the recording medium for execution.

Note that it is assumed that the "computer system" mentioned here refers to a computer system built into the terminal device 1 or the base station device 3, and the computer system includes an OS and hardware components such as a peripheral device. Furthermore, the "computer-readable recording medium" refers to a portable medium such as a flexible disk, a magneto-optical disk, a ROM, a CD-ROM, and the like, and a storage device built into the computer system such as a hard disk.

Moreover, the "computer-readable recording medium" may include a medium that dynamically retains a program for a short period of time, such as a communication line that is used to transmit the program over a network such as the Internet or over a communication line such as a telephone line, and may also include a medium that retains a program for a fixed period of time, such as a volatile memory within the computer system for functioning as a server or a client in such a case. Furthermore, the program may be configured to realize some of the functions described above, and also may be configured to be capable of realizing the functions described above in combination with a program already recorded in the computer system.

Furthermore, the base station device 3 according to the above-described embodiment may be achieved as an aggregation (an device group) including multiple devices. Each of the devices configuring such an device group may include some or all of the functions or the functional blocks of the base station device 3 according to the above-described embodiment. The device group may include each general function or each functional block of the base station device 3. Furthermore, the terminal device 1 according to the above-described embodiment can also communicate with the base station device as the aggregation.

Furthermore, the base station device 3 according to the above-described embodiment may serve as an Evolved Universal Terrestrial Radio Access Network (E-UTRAN) and/or NG-RAN (Next Gen RAN, NR-RAN). Furthermore, the base station device 3 according to the above-described embodiment may have some or all of the functions of a node higher than an eNodeB or the gNB.

Furthermore, some or all portions of each of the terminal device 1 and the base station device 3 according to the above-described embodiment may be typically achieved as an LSI which is an integrated circuit or may be achieved as a chip set. The functional blocks of each of the terminal device 1 and the base station device 3 may be individually achieved as a chip, or some or all of the functional blocks may be integrated into a chip. Furthermore, a circuit integration technique is not limited to the LSI, and may be realized with a dedicated circuit or a general-purpose processor. Furthermore, in a case that with advances in semiconductor technology, a circuit integration technology with which an LSI is replaced appears, it is also possible to use an integrated circuit based on the technology.

Furthermore, according to the above-described embodiment, the terminal device has been described as an example of a communication device, but the present invention is not limited to such a terminal device, and is applicable to a terminal device or a communication device of a fixed-type or a stationary-type electronic device installed indoors or outdoors, for example, such as an Audio-Video (AV) device, a kitchen device, a cleaning or washing machine, an air-conditioning device, office equipment, a vending machine, and other household devices.

The embodiments of the present invention have been described in detail above referring to the drawings, but the specific configuration is not limited to the embodiments and includes, for example, an amendment to a design that falls within the scope that does not depart from the gist of the present invention. Furthermore, various modifications are possible within the scope of one aspect of the present invention defined by claims, and embodiments that are made by suitably combining technical means disclosed according to the different embodiments are also included in the technical scope of the present invention. Furthermore, a configuration in which constituent elements, described in the respective embodiments and having mutually the same effects, are substituted for one another is also included in the technical scope of the present invention.

## Claims

1. A user equipment, UE, comprising:
a receiver configured to receive and measure an SSB; and
a transmitter configured to select a polarization mode of the terminal device based on first information and a best measurement result for the SSB if the SSB includes the first information associated with polarization mode for the SSB and
the transmitter is configured to transmit a measurement report including second information associated with the polarization mode for the terminal device and the best measurement result for the SSB.

2. The UE according to claim 1, wherein
if the SSB includes a switching pattern of polarization modes for UL transmissions of the UE, the transmitter is configured to transmit the measurement report based on the switching pattern.

3. The UE according to claim 1 or 2, wherein
if the SSB includes an indication of DL reception mode associated with the polarization modes, the transmitter is configured to transmit a measurement report including one or more measurement results based on the indication.

4. A method for a user equipment comprising:
receiving and measuring an SSB; and
selecting a polarization mode of the terminal device based on first information and a best measurement result for the SSB if the SSB includes the first information of polarization mode for the SSB and
transmitting a measurement report including second information of polarization mode for the terminal device and the best measurement result for the SSB.
